# EUROPÄISCHE PATENTSCHRIFT

(11) **EP 3 611 355 B1**
(45) Veröffentlichungstag und Bekanntmachung des Hinweises auf die Patenterteilung: **17.02.2021**
(21) Anmeldenummer: 19190226.1
(22) Anmeldetag: 06.08.2019
(51) Int. Cl.: F01N 13/00, F01N 3/20, F01N 3/10, F01N 3/021

(54) **ABGASBEHANDLUNGSANORDNUNG**
EXHAUST GAS TREATMENT ASSEMBLY
DISPOSITIF DE TRAITEMENT DE GAZ D'ÉCHAPPEMENT

(30) Priorität: 13.08.2018 DE 102018119592
(43) Veröffentlichungstag der Anmeldung: 19.02.2020
(73) Patentinhaber: Eberspächer Exhaust Technology GmbH & Co. KG, 66539 Neunkirchen (DE)
(72) Erfinder: Henzler, Markus, 72661 Grafenberg (DE); Mayer, Michael, 72658 Bempflingen (DE); Vyelyayev, Olexander, 70437 Stuttgart (DE)
(74) Vertreter: Ruttensperger Lachnit Trossin Gomoll

(56) Entgegenhaltungen:
- EP-A1- 2 873 821
- EP-A1- 3 346 103
- WO-A1-2011/154254
- DE-A1-102017 101 923

## Beschreibung

Die vorliegende Erfindung betrifft eine Abgasbehandlungsanordnung, die zur Reinigung von von einer Brennkraftmaschine ausgestoßenem Abgas in einer Abgasanlage in einem Fahrzeug Anwendung finden kann.

Zum Bereitstellen eines kompakten Aufbaus von Abgasanlagen ist es bekannt, in derartigen Abgasbehandlungsanordnungen mehrere das Abgas verschiedenen Reinigungsprozeduren unterziehende Systembereiche vorzusehen. Ein derartiger Systembereich umfasst eine SCR-Katalysatoranordnung, in welcher unter katalytischer Umsetzung von Abgas und in dieses eingespritztem Reaktionsmittel, beispielsweise eine Harnstoff/Wasser-Lösung, der Stickoxidanteil im Abgas gesenkt wird. Ein weiterer derartiger Systembereich kann beispielsweise eine Oxidationskatalysatoranordnung oder/und eine Partikelfilteranordnung umfassen.

Eine Abgasbehandlungseinheit gemäß dem Oberbegriff des Anspruchs 1 ist aus der WO 2011/154254 A1 bekannt. Bei dieser bekannten Abgasbehandlungseinheit strömt das eine als Oxidationskatalysator ausgebildete Abgasbehandlungseinheit verlassende Abgas in ein trichterartiges und den Abgasstrom zu einem stromaufwärtigen Endbereich einer Abgasleitung führendes Strömungsumlenkgehäuse. In das Strömungsumlenkgehäuse wird in Richtung auf den stromaufwärtigen Endbereich der Abgasleitung zu vermittels einer Reaktionsmittelabgabeanordnung Reaktionsmittel in das Strömungsumlenkgehäuse bzw. den darin geleiteten Abgasstrom eingespritzt. Ein erster Längenbereich der Abgasleitung führt zentral durch die ringartige ausgebildete SCR-Katalysatoranordnung zu einem im Wesentlichen quer zur Gehäuselängsachse sich erstreckenden zweiten Längenbereich der Abgasleitung. Von diesem zweiten Längenbereich führt ein auch einen Partikelfilter enthaltender dritter Längenbereich der Abgasleitung zu einem von der Abgasbehandlungseinheit abgewandten und einen SCR-Katalysatoranordnung-Eintritt bereitstellenden axialen Endbereich der SCR-Katalysatoreinheit.

Die EP 3 346 103 A1 offenbart eine Abgasbehandlungsanordnung, bei welcher in einem mäanderartig gewundenen Strömungskanal eine Abgasbehandlungseinheit und eine SCR-Katalysatoranordnung aufeinanderfolgend angeordnet sind. Das die Abgasbehandlungseinheit verlassende Abgas wird in ein einen Abgasbehandlungseinheit-Austritt bereitstellendes erstes Strömungsumlenkgehäuse eingeleitet und strömt dann zwischen der Abgasbehandlungseinheit und der SCR-Katalysatoranordnung zu einem einen SCR-Katalysatoranordnung-Eintritt bereitstellenden zweiten Strömungsumlenkgehäuse. Im Bereich dieses den SCR-Katalysatoranordnung-Eintritt bereitstellenden zweiten Strömungsumlenkgehäuses wird Reaktionsmittel in den Abgasstrom eingeleitet.

Es ist die Aufgabe der vorliegenden Erfindung, eine Abgasbehandlungsanordnung für eine Abgasanlage einer Brennkraftmaschine vorzusehen, welche bei kompakter Bauart eine effiziente Reinigung von diese durchströmendem Abgas erreicht.

Erfindungsgemäß wird diese Aufgabe gelöst durch eine Abgasbehandlungsanordnung für eine Abgasanlage einer Brennkraftmaschine gemäß Anspruch 1. Diese umfasst:
- ein Abgasbehandlungsgehäuse mit einem Gehäuseeintritt und einem Gehäuseaustritt,
- eine Abgasbehandlungseinheit in dem Abgasbehandlungsgehäuse mit einem auf den Gehäuseeintritt folgenden Abgasbehandlungseinheit-Eintritt und einem Abgasbehandlungseinheit-Austritt,
- eine SCR-Katalysatoranordnung in dem Abgasbehandlungsgehäuse mit einem auf den Abgasbehandlungseinheit-Austritt folgenden SCR-Katalysatoranordnung-Eintritt und einem SCR-Katalysatoranordnung-Austritt,
- eine Reaktionsmittelabgabeanordnung zur Abgabe von Reaktionsmittel stromaufwärts des SCR-Katalysatoranordnung-Eintritts,
wobei in dem Abgasbehandlungsgehäuse ein in einer Abgasleitung gebildeter Abgaskanal von dem Abgasbehandlungseinheit-Austritt derart zu dem SCR-Katalysatoranordnung-Eintritt führt, dass die SCR-Katalysatoranordnung am SCR-Katalysatoranordnung-Austritt verlassendes Abgas die Abgasleitung wenigstens bereichsweise umströmt.

Bei dem erfindungsgemäßen Aufbau einer Abgasbehandlungsanordnung wird die Wärme des die SCR-Katalysator-Anordnung verlassenden Abgasstroms genutzt, um durch thermische Wechselwirkung desselben mit der das Gemisch aus Abgas und Reaktionsmittel zur SCR-Katalysatoranordnung führenden Abgasleitung Wärme auf diese und somit das darin strömende Gemisch zu übertragen. Dies unterstützt die Verdampfung des im Abgas mitgeführten bzw. auf die Innenoberfläche der Abgasleitung auftreffenden Reaktionsmittels, was zu einer verbesserten bzw. gleichmäßigeren Durchmischung des Abgases mit dem Reaktionsmittel und somit zu einer effizienteren katalytischen Reaktion in der SCR-Katalysatoranordnung bei minimiertem Wärmeverlust führt.

Um trotz der kompakten Bauart der erfindungsgemäßen Abgasbehandlungsanordnung eine möglichst lange Strömungsstrecke bereitzustellen, in welcher eine Durchmischung von Abgas und Reaktionsmittel herbeigeführt werden kann, ist die Reaktionsmittelabgabeanordnung zum Abgeben von Reaktionsmittel im Bereich des Abgasbehandlungseinheit-Austritts angeordnet.

Hierzu ist vorgesehen, dass der Abgasbehandlungseinheit-Austritt ein erstes Strömungsumlenkgehäuse umfasst, und dass die Reaktionsmittelabgabeanordnung im Bereich des ersten Strömungsumlenkgehäuses angeordnet ist.

Um im Wesentlichen die gesamte Länge der Abgasleitung für die Durchmischung von Abgas und Reaktionsmittel nutzen zu können, ist ein stromaufwärtiger Endbereich der Abgasleitung zur Aufnahme von das erste Strömungsumlenkgehäuse verlassendem Abgas angeordnet, und die Reaktionsmittelabgabeanordnung ist zum Abgeben von Reaktionsmittel in Richtung zu dem stromaufwärtigen Endbereich der Abgasleitung angeordnet.

Zur effizienten Ausnutzung des im Abgasbehandlungsgehäuse zur Verfügung stehenden Volumens bei größtmöglicher thermischer Wechselwirkung der Abgasleitung mit diese umströmendem Abgas ist die Abgasleitung im Abgasbehandlungsgehäuse mit einem ersten Leitungsbereich von dem Abgasbehandlungseinheit-Austritt bezüglich einer Gehäuselängsachse seitlich neben der SCR-Katalysatoranordnung geführt, mit einem zweiten Leitungsbereich im Wesentlichen quer zur Gehäuselängsachse entlang des SCR-Katalysatoranordnung-Austritts geführt, und mit einem dritten Leitungsbereich bezüglich der Gehäuselängsachse seitlich neben der SCR-Katalysatoranordnung zum SCR-Katalysatoranordnung-Eintritt geführt.

Zum Einleiten des Gemisches aus Abgas und Reaktionsmittel in die SCR-Katalysatoranordnung kann der SCR-Katalysatoranordnung-Eintritt ein zweites Strömungsumlenkgehäuse umfassen. Dabei kann der dritte Leitungsbereich zu dem zweiten Strömungsumlenkgehäuse führen.

Um dem die SCR-Katalysatoranordnung verlassenden Abgas ein Umströmen der im Abgasbehandlungsgehäuse geführten Abgasleitung in einfacher Weise zu ermöglichen, wird vorgeschlagen, dass der SCR-Katalysatoranordnung-Austritt zu einem Gehäuseinnenraum des Abgasbehandlungsgehäuses offen ist. Ferner kann der Gehäuseaustritt eine zu dem Gehäuseinnenraum offene Austrittsöffnung umfassen.

Für eine weitergehende, effiziente Abgasreinigung kann beispielsweise vorgesehen sein, dass die Abgasbehandlungseinheit eine Katalysatoranordnung, vorzugsweise Oxidationskatalysatoranordnung, oder/und eine Partikelfilteranordnung umfasst.

Die Erfindung betrifft ferner eine Abgasanlage für eine Brennkraftmaschine eines Fahrzeugs, umfassend eine erfindungsgemäß aufgebaute Abgasbehandlungsanordnung.

Die vorliegende Erfindung wird nachfolgend mit Bezug auf die beiliegenden Figuren detailliert beschrieben. Es zeigt:
- Fig. 1: in prinzipartiger Darstellung eine Längsschnittansicht einer Abgasbehandlungsanordnung;
- Fig. 2: in prinzipartiger Darstellung eine Axialansicht der Abgasbehandlungsanordnung der Fig. 1.

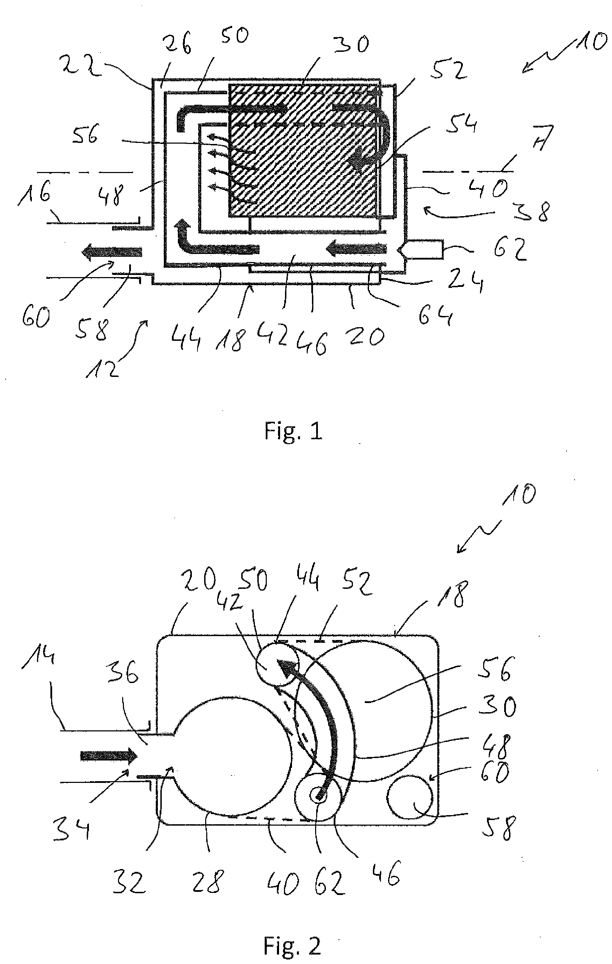

In den Fig. 1 und 2 ist eine Abgasbehandlungsanordnung 10 einer allgemein mit 12 bezeichneten Abgasanlage einer Brennkraftmaschine eines Fahrzeugs dargestellt. Die Abgasanlage 12 umfasst ein beispielsweise von einem Auslasskrümmer einer Brennkraftmaschine zu der Abgasbehandlungsanordnung 10 führendes Abgasrohr 14 sowie ein von der Abgasbehandlungsanordnung 10 beispielsweise zu einem Schalldämpfer führendes Abgasrohr 16.

Die Abgasbehandlungsanordnung 10 umfasst ein allgemein mit 18 bezeichnetes Abgasbehandlungsgehäuse mit einer in Richtung der Gehäuseachse A langgestreckten Umfangswand 20 und an beiden axialen Seiten derselben jeweils einer Stirnwand 22 bzw. 24.

In einem Gehäuseinnenraum 26 des Abgasbehandlungsgehäuses 18 sind in Abgasströmungsrichtung aufeinanderfolgend eine Abgasbehandlungseinheit 28 und eine SCR (Selektive katalytische Reduktion)-Katalysatoranordnung 30 vorgesehen. Die Abgasbehandlungseinheit 28 kann dabei beispielsweise eine Oxidationskatalysatoranordnung, insbesondere Diesel-Oxidationskatalysatoranordung, sowie eine Partikelfilteranordnung umfassen. Ein Abgasbehandlungseinheit-Eintritt 32 ist zu einem Gehäuseeintritt 34 des Abgasbehandlungsgehäuses 18 offen. Das über das Abgasrohr 14 zum Gehäuseeintritt 34 geleitete Abgas strömt über eine im Bereich des Gehäuseeintritts 34 beispielsweise in der Umfangswand 20 gebildete Eintrittsöffnung 36 in den Abgasbehandlungseinheit-Eintritt 32 und durchströmt die Abgasbehandlungseinheit 28 beispielsweise im Wesentlichen in Richtung der Gehäuseachse A.

An einem im Bereich der Stirnwand 24 bereitgestellten Abgasbehandlungseinheit-Austritt 38 verlässt das Abgas die Abgasbehandlungseinheit 28. Der Abgasbehandlungseinheit-Austritt 38 kann beispielsweise ein außen an die Stirnwand 24 angesetztes erstes Strömungsumlenkgehäuse 40 umfassen, in welchem das die Abgasbehandlungseinheit 28 mit einer im Wesentlichen in Richtung der Gehäuseachse A orientierten Strömungsrichtung verlassende Abgas zunächst in radialer Richtung bezüglich der Gehäuseachse A umgelenkt wird und dann erneut umgelenkt wird, so dass im Bereich des ersten Strömungsumlenkungsgehäuses der Abgasstrom eine Umlenkung um etwa 180° erfährt.

Im Gehäuseinnenraum 26 ist eine einen Abgaskanal 42 bereitstellende Abgasleitung 44 angeordnet. Diese schließt im Bereich der Stirnwand 24 mit einem ersten Leitungsbereich 46 an das erste Strömungsumlenkgehäuse 40 an. Der erste Leitungsbereich 46 führt, seitlich neben der SCR-Katalysatoranordnung 30 und auch seitlich neben der Abgasbehandlungseinheit 28 beispielsweise im Wesentlichen in Richtung der Gehäuseachse verlaufend, entlang der SCR-Katalysatoranordnung 30. An den ersten Leitungsbereich 46 schließt ein zweiter Leitungsbereich 48 an, mit welchem die Abgasleitung 44 die SCR-Katalysatoranordnung 30 im Wesentlichen quer zur Gehäuseachse A quert. An den zweiten Leitungsbereich 48 schließt dann ein dritter Leitungsbereich 50 an, der, beispielsweise wieder im Wesentlichen in Richtung der Gehäuseachse A verlaufend, entlang der SCR-Katalysatoranordnung 30 in Richtung zur Stirnwand 24 führt. Im Bereich der Stirnwand 24 ist ein zweites Strömungsumlenkgehäuse 52 vorgesehen. In dieses mündet der dritte Leitungsbereich 50 ein. Im zweiten Strömungsumlenkgehäuse 52 wird der den dritten Leitungsbereich 50 verlassende Abgasstrom zunächst nach radial und dann erneut in Richtung axial umgelenkt, so dass auch im zweiten Strömungsumlenkgehäuse 52 der Abgasstrom eine Umlenkung um etwa 180° erfährt.

Der das zweite Strömungsumlenkgehäuse 52 wieder verlassende Abgasstrom tritt in einem SCR-Katalysatoranordnung-Eintritt 54 in die SCR-Katalysatoranordnung 30 ein, durchströmt diese im Wesentlichen in Richtung der Gehäuseachse A und verlässt die SCR-Katalysatoranordnung 30 im Bereich eines SCR-Katalysator-Austritts 56. An diesem SCR-Katalysatoranordnung-Austritt 56 tritt das die SCR-Katalysatoranordnung 30 verlassende Abgas in den Gehäuseinnenraum 26 ein und umströmt dabei zumindest den im Wesentlichen quer zur Gehäuseachse A verlaufenden und dabei die SCR-Katalysatoranordnung 30 querenden zweiten Leitungsbereich 48 der Abgasleitung 44. Auch andere Abschnitte der Abgasleitung 44, insbesondere des ersten Leitungsbereichs 46 und des dritten Leitungsbereichs 50, können von dem die SCR-Katalysatoranordnung 30 verlassenden Abgasstrom umströmt werden, bevor dieser den Gehäuseinnenraum 26 durch eine Austrittsöffnung 58 eines Gehäuseaustritts 60 des Abgasbehandlungsgehäuses 18 in Richtung zum Abgasrohr 16 verlässt.

Das für die in der SCR-Katalysatoranordnung 30 ablaufende katalytische Reaktion erforderliche Reduktionsmittel, also beispielsweise eine als Reaktionsmittel eingesetzte Harnstoff/Wasser-Lösung, wird durch eine allgemein auch als Injektor bezeichnete Reaktionsmittelabgabeanordnung 62 in den die Abgasbehandlungsanordnung 10 durchströmenden Abgasstrom eingeleitet. Die Reaktionsmittelabgabeanordnung 62 ist vorzugsweise stromabwärts der Abgasbehandlungseinheit 28 angeordnet bzw. zur Abgabe von Reaktionsmittel in den Abgasstrom stromabwärts der Abgasbehandlungseinheit 28 positioniert. Beispielsweise kann die Reaktionsmittelabgabeanordnung 62 im Bereich des ersten Strömungsumlenkungsgehäuses 40 positioniert sein, um das von dieser abzugebende Reaktionsmittel in einen stromaufwärtigen Endbereich 64 der Abgasleitung 44 bzw. des ersten Leitungsbereichs 46 derselben einzuleiten. Dies gewährleistet eine möglichst lange Strömungsstrecke zwischen der Einleitung des Reaktionsmittels in den Abgasstrom und der Einleitung des mit Reaktionsmittel durchmischten Abgasstroms in die SCR-Katalysatoranordnung 30. Wie die Fig. 1 und 2 zeigen, kann im Wesentlichen die gesamte Länge der im Innenraum 27 verlaufenden Abgasleitung 44 genutzt werden, um eine Durchmischung von Abgas und Reaktionsmittel herbeizuführen. Auch die Umlenkung des Abgasstroms im Bereich des zweiten Strömungsumlenkungsgehäuses 52 und die dabei auftretenden Verwirbelungen unterstützen die Durchmischung von Abgas und Reaktionsmittel.

Diese Durchmischung wird ferner dadurch unterstützt, dass ein wesentlicher Längenabschnitt der Abgasleitung 44 von dem die SCR-Katalysatoranordnung 30 nach Durchführen der exothermen katalytischen Reaktion verlassenden Abgas umströmt wird. Dabei kann in dem Abgas transportierte Wärme auf die Abgasleitung 44 übertragen werden, so dass diese und damit das im Abgaskanal 42 strömende Gemisch aus Abgas und Reaktionsmittel erwärmt werden. Dies unterstützt die Verdampfung des in Tröpfchenform im Abgas mitgeführten Reaktionsmittels und unterstützt weiter die Abdampfung des in Tröpfchenform auf die Innenoberfläche der Abgasleitung 44 auftreffenden Reaktionsmittels. Besonders vorteilhaft ist dabei, dass gemäß den Prinzipien der vorliegenden Erfindung die Abgasleitung 40 mit ihrem zweiten Leitungsbereich 48 derart verläuft, dass sie den Bereich der SCR-Katalysatoranordnung 30, in welchem das diese durchströmende Abgas austritt, bereichsweise überdeckt. In diesem Bereich wird eine unmittelbare thermische Wechselwirkung zwischen dem Abgasstrom und der Abgasleitung 44 und somit eine effiziente Übertragung von Wärme auf diese herbeigeführt.

Zu dieser effizienten thermischen Wechselwirkung trägt bei, dass der den ersten Leitungsbereich 46 mit dem dritten Leitungsbereich 50 verbindende zweite Leitungsbereich 48, welcher sich im Wesentlichen quer zur Gehäuseachse A erstreckt, gekrümmt ist und somit einen verstärkten Überlapp mit dem SCR-Katalysatoranordnung-Austritt 56 bereitstellt. Es ist darauf hinzuweisen, dass auch andere Verläufe insbesondere für den zweiten Leitungsbereich 48 vorgesehen sein können. So kann dieser im Wesentlichen U-förmig über den SCR-Katalysatoranordnung-Austritt 56 sich erstreckend ausgebildet sein oder kann eine mäanderartige oder ondulierte Struktur bereitstellen. Auch der erste Leitungsbereich 46 oder/und der dritte Leitungsbereich 50 können, abweichend von dem dargestellten, im Wesentlichen geradlinig in Richtung der Gehäuseachse A sich erstreckenden Verlauf, beispielsweise mit gekrümmtem, onduliertem oder mäanderartigem Verlauf ausgebildet sein, um einerseits die thermische Wechselwirkung mit im Gehäuseinnenraum 26 strömendem Abgas zu verbessern und andererseits die zur Durchmischung von Abgas und Reaktionsmittel nutzbare Länge des in der Abgasleitung 44 gebildeten Abgaskanals 42 zu vergrößern.

## Patentansprüche

1. Abgasbehandlungsanordnung für eine Abgasanlage einer Brennkraftmaschine, umfassend:
- ein Abgasbehandlungsgehäuse (18) mit einem Gehäuseeintritt (34) und einem Gehäuseaustritt (60),
- eine Abgasbehandlungseinheit (28) in dem Abgasbehandlungsgehäuse (18) mit einem auf den Gehäuseeintritt (34) folgenden Abgasbehandlungseinheit-Eintritt (32) und einem Abgasbehandlungseinheit-Austritt (38),
- eine SCR-Katalysatoranordnung (30) in dem Abgasbehandlungsgehäuse (18) mit einem auf den Abgasbehandlungseinheit-Austritt (38) folgenden SCR-Katalysatoranordnung-Eintritt (54) und einem SCR-Katalysatoranordnung-Austritt (56),
- eine Reaktionsmittelabgabeanordnung (62) zur Abgabe von Reaktionsmittel stromaufwärts des SCR-Katalysatoranordnung-Eintritts (54),
wobei in dem Abgasbehandlungsgehäuse (18) ein in einer Abgasleitung (44) gebildeter Abgaskanal (42) von dem Abgasbehandlungseinheit-Austritt (38) derart zu dem SCR-Katalysatoranordnung-Eintritt (54) führt, dass die SCR-Katalysatoranordnung (30) am SCR-Katalysatoranordnung-Austritt (56) verlassendes Abgas die Abgasleitung (44) wenigstens bereichsweise umströmt, wobei die Reaktionsmittelabgabeanordnung (62) zum Abgeben von Reaktionsmittel im Bereich des Abgasbehandlungseinheit-Austritts (38) angeordnet ist, wobei der Abgasbehandlungseinheit-Austritt (38) ein erstes Strömungsumlenkgehäuse (40) umfasst und die Reaktionsmittelabgabeanordnung (62) im Bereich des ersten Strömungsumlenkgehäuses (40) angeordnet ist, wobei ein stromaufwärtiger Endbereich (64) der Abgasleitung (44) zur Aufnahme von das erste Strömungsumlenkgehäuse (40) verlassendem Abgas angeordnet ist und die Reaktionsmittelabgabeanordnung (62) zum Abgeben von Reaktionsmittel in Richtung zu dem stromaufwärtigen Endbereich (64) der Abgasleitung (44) angeordnet ist, wobei die Abgasleitung (44) im Abgasbehandlungsgehäuse (18) mit einem ersten Leitungsbereich (46) von dem Abgasbehandlungseinheit-Austritt (38) zu einem zweiten Leitungsbereich (48) geführt ist und in dem zweiten Leitungsbereich (48) im Wesentlichen quer zu einer Gehäuselängsachse (A) geführt ist, **dadurch gekennzeichnet, dass** die Abgasleitung (44) im ersten Leitungsbereich (46) bezüglich der Gehäuselängsachse (A) seitlich neben der SCR-Katalysatoranordnung (30) geführt ist, im zweiten Leitungsbereich (48) entlang des SCR-Katalysatoranordnung-Austritts (56) geführt ist und mit einem dritten Leitungsbereich (50) bezüglich der Gehäuselängsachse (A) seitlich neben der SCR-Katalysatoranordnung (30) zum SCR-Katalysatoranordnung-Eintritt (54) geführt ist.

2. Abgasbehandlungsanordnung nach Anspruch 1, **dadurch gekennzeichnet, dass** der SCR-Katalysatoranordnung-Eintritt (54) ein zweites Strömungsumlenkgehäuse (52) umfasst.

3. Abgasbehandlungsanordnung nach Anspruch 2, **dadurch gekennzeichnet, dass** der dritte Leitungsbereich (50) zu dem zweiten Strömungsumlenkgehäuse (52) führt.

4. Abgasbehandlungsanordnung nach einem der vorangehenden Ansprüche, **dadurch gekennzeichnet, dass** der SCR-Katalysatoranordnung-Austritt (56) zu einem Gehäuseinnenraum (26) des Abgasbehandlungsgehäuses (18) offen ist, oder/und dass der Gehäuseaustritt (60) eine zu dem Gehäuseinnenraum (26) offene Austrittsöffnung (58) umfasst.

5. Abgasbehandlungsanordnung nach einem der vorangehenden Ansprüche, **dadurch gekennzeichnet, dass** die Abgasbehandlungseinheit (28) eine Katalysatoranordnung, vorzugsweise Oxidationskatalysatoranordnung, oder/und eine Partikelfilteranordnung umfasst.

6. Abgasanlage für eine Brennkraftmaschine eines Fahrzeugs, umfassend eine Abgasbehandlungsanordnung (10) nach einem der vorangehenden Ansprüche.

## Claims

1. Exhaust gas treatment device for an exhaust system of an internal combustion engine, comprising:
- an exhaust gas treatment housing (18) with a housing inlet (34) and with a housing outlet (60),
- an exhaust gas treatment unit (28) in the exhaust gas treatment housing (18) with an exhaust gas treatment unit inlet (32) following the housing inlet (34) and with an exhaust gas treatment unit outlet (38),
- an SCR catalytic converter device (30) in the exhaust gas treatment housing (18) with an SCR catalytic converter device inlet (54) following the exhaust gas treatment unit outlet (38) and with an SCR catalytic converter device outlet (56),
- a reactant releasing device (62) for releasing reactant upstream of the SCR catalytic converter device inlet (54),
wherein an exhaust gas duct (42) formed in an exhaust gas pipe (44) leads in the exhaust gas treatment housing (18) from the exhaust gas treatment unit outlet (38) to the SCR catalytic converter device inlet (54) such that exhaust gas leaving the SCR catalytic converter device (30) at the SCR catalytic converter device outlet (56) flows around the exhaust gas pipe (44) in at least some areas, wherein the reactant releasing device (62) for releasing reactant is disposed in the area of the exhaust gas treatment unit outlet (38), wherein the exhaust gas treatment unit outlet (38) comprises a first flow deflection housing (40), and the reactant releasing device (62) is arranged in the area of the first flow deflection housing (40), wherein an upstream end area (64) of the exhaust gas pipe (44) is arranged for receiving exhaust gas leaving the first flow deflection housing (40), and the reactant releasing device (62) is arranged for releasing reactant in the direction of the upstream end area (64) of the exhaust gas pipe (44), wherein the exhaust gas pipe (44) is led in the exhaust gas treatment housing (18) with a first pipe area (46) from the exhaust gas treatment unit outlet (38) to a second pipe area (48) and is led in the second pipe area (48) essentially at right angles to the housing longitudinal axis (A), **characterized in that** the exhaust gas pipe (44) is led in the first pipe area (46) laterally next to the SCR catalytic converter device (30) in relation to the housing longitudinal axis (A), is led in the second pipe area (48) along the SCR catalytic converter device outlet (56), and is led with a third pipe area (50) laterally next to the SCR catalytic converter device (30) in relation to the housing longitudinal axis (A) to the SCR catalytic converter device inlet (54).

2. Exhaust gas treatment device in accordance with claim 1, **characterized in that** the SCR catalytic converter device inlet (54) comprises a second flow deflection housing (52).

3. Exhaust gas treatment device in accordance with claim 2, **characterized in that** the third pipe area (50) leads to the second flow deflection housing (52).

4. Exhaust gas treatment device in accordance with one of the preceding claims, **characterized in that** the SCR catalytic converter device outlet (56) is open towards a housing interior (26) of the exhaust gas treatment housing (18), or/and that the housing outlet (60) comprises an outlet opening (58) that is open towards the housing interior (26).

5. Exhaust gas treatment device in accordance with one of the preceding claims, **characterized in that** the exhaust gas treatment unit (28) comprises a catalytic converter device, preferably an oxidation catalytic converter device, or/and a particle filter device.

6. Exhaust system for an internal combustion engine of a vehicle, comprising an exhaust gas treatment device (10) in accordance with one of the preceding claims.

## Revendications

1. Dispositif de traitement des gaz d'échappement pour un système d'échappement d'un moteur à combustion interne, comprenant :
- un boîtier de traitement des gaz d'échappement (18) avec une entrée de boîtier (34) et une sortie de boîtier (60),
- une unité de traitement des gaz d'échappement (28) dans le boîtier de traitement des gaz d'échappement (18) avec une entrée d'unité de traitement des gaz d'échappement (32) suivant l'entrée de boîtier (34) et avec une sortie d'unité de traitement des gaz d'échappement (38),
- un dispositif de catalyseur SCR (30) dans le boîtier de traitement des gaz d'échappement (18) avec une entrée de dispositif de catalyseur SCR (54) suivant la sortie d'unité de traitement des gaz d'échappement (38) et avec une sortie de dispositif de catalyseur SCR (56),
- un dispositif de libération de réactif (62) pour libérer le réactif en amont de l'entrée de dispositif de conversion de catalyseur SCR (54),
dans lequel dans le boîtier de traitement des gaz d'échappement (18) un conduit de gaz d'échappement (42) formé dans un tuyau de gaz d'échappement (44) mène de l'unité de traitement des gaz d'échappement (38) à l'entrée de dispositif de catalyseur SCR (54) de telle sorte que les gaz d'échappement quittant le dispositif de catalyseur SCR (30) à la sortie de dispositif de catalyseur SCR (56) s'écoulent autour du tuyau de gaz d'échappement (44) dans au moins certaines zones, dans lequel le dispositif de libération de réactif (62) est disposé dans la région de l'unité de traitement des gaz d'échappement (38) pour libérer du réactif, dans lequel la sortie d'unité de traitement des gaz d'échappement (38) comprend un premier boîtier de déviation d'écoulement (40), et le dispositif de libération de réactif (62) est disposé dans la région du premier boîtier de déviation d'écoulement (40) dans lequel une zone d'extrémité en amont (64) du tuyau de gaz d'échappement (44) est disposée pour recevoir les gaz d'échappement quittant le premier boîtier de déviation d'écoulement (40), et le dispositif de libération de réactif (62) est disposé pour libérer du réactif en direction de la zone d'extrémité en amont (64) du tuyau de gaz d'échappement (44), dans lequel le tuyau de gaz d'échappement (44) est guidé dans le boîtier de traitement des gaz d'échappement (18) avec une première zone de tuyau (46) de la sortie d'unité de traitement des gaz d'échappement (38) à une deuxième zone de tuyau (48) et est guidé dans la deuxième zone de tuyau (48) essentiellement à angle droit par rapport à l'axe longitudinal de boîtier (A), **caractérisé en ce que** le tuyau de gaz d'échappement (44) est guidé dans la première zone de tuyau (46) latéralement à côté du dispositif de catalyseur SCR (30) par rapport à l'axe longitudinal de boîtier (A), est guidé dans la deuxième zone de tuyau (48) le long de la sortie de dispositif de catalyseur SCR (56) et est guidé avec une troisième zone de tuyau (50) latéralement à côté du dispositif de catalyseur SCR (30) par rapport à l'axe longitudinal de boîtier (A) vers l'entrée de dispositif de catalyseur SCR (54).

2. Dispositif de traitement des gaz d'échappement selon la revendication 1, **caractérisé en ce que** l'entrée de dispositif de catalyseur SCR (54) comprend un deuxième boîtier de déviation d'écoulement (52).

3. Dispositif de traitement des gaz d'échappement selon la revendication 2, **caractérisé en ce que** la troisième zone de tuyau (50) mène au deuxième boîtier de déviation d'écoulement (52).

4. Dispositif de traitement des gaz d'échappement selon l'une des revendications précédentes, **caractérisé en ce que** la sortie de dispositif de catalyseur SCR (56) est ouverte vers un intérieur de boîtier (26) du boîtier de traitement des gaz d'échappement (18), et/ou **en ce que** la sortie de boîtier (60) comprend une ouverture de sortie (58) qui est ouverte vers l'intérieur de boîtier (26).

5. Dispositif de traitement des gaz d'échappement selon l'une des revendications précédentes, **caractérisé en ce que** l'unité de traitement des gaz d'échappement (28) comprend un dispositif de catalyseur, de préférence un dispositif de catalyseur d'oxydation, et/ou un dispositif de filtre à particules.

6. Système d'échappement pour un moteur à combustion interne d'un véhicule, comprenant un dispositif de traitement des gaz d'échappement (10) selon l'une des revendications précédentes.
